# EUROPÄISCHE PATENTANMELDUNG

(11) **EP 1 870 820 A1**
(43) Veröffentlichungstag der Anmeldung: **26.12.2007**
(21) Anmeldenummer: 06115732.7
(22) Anmeldetag: 20.06.2006
(51) Int. Cl.: G06F 17/10

(54) **Datenstruktur zur Präsentation von Mengen**

(71) Anmelder: Alcatel Lucent, 75008 Paris (FR)
(72) Erfinder: Stahl, Bernd, D-71229, Leonberg (DE); Spitzer, Uwe, D-71522, Backnang (DE); Siegfarth, Reinhard, D-71229, Leonberg (DE); Howe, Friedhelm, D-70439, Stuttgart (DE); Breiholz, Andreas, D-71723, Grossbottwar (DE)
(74) Vertreter: Rausch, Gabriele

(57) **Zusammenfassung**

Die Erfindung betrifft ein Computer Programm Produkt mit einer Datenstruktur zum Präsentieren einer Menge von Mengen von Elementen aus einem festen Elementvorrat und die Datenstruktur Methoden zum Modifizieren oder Inspizieren einer dieser Mengen hat, dadurch gekennzeichnet, dass die Menge durch Präsentationen von provisionierten Teilmengen aus einem induzierten partiellen Mengenverband zusammengesetzt ist. Die Erfindung betrifft auch ein Netzelement mit einem solchen Computer Programm Produkt. Und die Erfindung betrifft ein Verfahren zum Modifizieren oder Inspizieren einer Datenstruktur zum Präsentieren einer beliebigen Menge von Mengen von Elementen aus einem festen Elementvorrat dadurch gekennzeichnet, dass das Verfahren die folgenden Schritte aufweist: Identifizieren einer Menge von Teilmengen einer Menge zur Präsentation dieser Menge anhand von Vorkommen von Elementen in der Menge von Mengen von Elementen, speichern der Teilmengen und Rekonstruieren der Menge aus den Teilmengen zum Modifizieren und Inspizieren der Datenstruktur.

## Beschreibung

Die Erfindung betrifft ein Computer Programm Produkt mit einer Datenstruktur zum Präsentieren einer Menge von Mengen von Elementen aus einem festen Elementvorrat, ein Netzelement eines Telekommunikationssystems und ein Verfahren dazu.

Die reichhaltige Vielfalt bei Software-Produkten und deren Konfigurierbarkeit stellt bei der Interaktion und der Integration von solchen Produkten eine große Herausforderung dar.

Neuere Produkte, zum Beispiel in der Telekommunikation, besitzen unterschiedliche (sogenannte) Features. Ein Telekommunikationssystem muss darauf reagieren. Zu diesem Zweck werden die Features in Datenstrukturen gehalten.

Die dazu verwendeten Technologien sind schon länger bekannt. Beispielsweise findet man in dem Buch " Datastructures and Algorithms" von A. Aho, J. Hopcroft und J. Ullmann, reprinted 1983 by Addison-Wesley, Copyright 1983 by Bell Tellephone Laboratories, in Kapittel 4 " Basic Operations on Sets" die zugehörigen Datenstrukturen wie Verkette Listen, Suchbäume, oder die gängigen Bitvektoren, Boolean Arrays, die charakteristische Funktion s: S -> {0,1} einer Menge S präsentieren.

Für Mengen deren Elemente keine Ordnungsstruktur besitzen werden meistens Bitvektoren verwendet.

Im Gebiet der Datenbanken sind Mengenstrukturen hinreichend bekannt so wird beispielsweise in Codasyl Informationen nur durch Mengen präsentiert. Die heutigen relationalen Datenbanken basieren auf Tabellenstrukturen, die meist durch B*-Bäume präsentiert werden. Als komplexer Datentyp gibt es jedoch auch Mengen. Zum Beispiel hat das Datenbaksystem MySQL den komplexen Datentyp , SET' . Mike Hiller schreibt unter http://www.mysql.de/news-and-events/newsletter/2003-08/a0000000205.html: "One of the least commonly used of the MySQL datatypes has to be the SET datatype. The SET datatype is a string type, but is often referred to as a complex type due to the increased complexity involved in implementing them. A SET datatype can hold any number of strings from a predefined list of strings specified during table creation. The SET datatype is similar to the ENUM datatype in that they both work with predefined sets of strings, but where the ENUM datatype restricts you to a single member of the set of predefined strings, the SET datatype allows to store any of the values together, from none to all of them. "

Der Nachteil dieser Datenstruktur ist, dass bei der Präsentation von Mengen mit vielen verschiedenen Elementen durch lange Bitvektoren Speicher ineffizient genutzt wird und die Mengenoperationen wie Vereinigung, Schnitt, der Test auf Zugehörigkeit, etc. dadurch ebenfalls ineffizient sind. Sie steigen linear mit der Länge der Vektoren.

Die Lösung dieses Problems besteht in einer adäquaten Datenstruktur für den abstrakten Datentyp SET, also einem Computer Programm mit einer Datenstruktur zum Präsentieren einer beliebigen Menge von Mengen von Elementen aus einem festen Elementvorrat und mit Methoden zum Modifizieren oder Inspizieren einer dieser Mengen.

Dabei wird eine Menge durch Präsentationen von Teilmengen zusammengesetzt, wobei diese Teilmengen durch die Häufigkeit der Vorkommens von Elementen definiert sind.

Insbesondere findet die Erfindung Anwendung in Netzelementen eines Kommunikationssystems, das Mittel zur Kommunikation mit anderen Netzelementen aufweist, wobei das Mittel ein Computer Programm wie oben umfassen.

Die Erfindung besteht in einem Verfahren zum Modifizieren oder Inspizieren einer Datenstruktur zum Präsentieren einer beliebigen Menge von Mengen von Elementen aus einem festen Elementvorrat, wobei das Verfahren die folgenden Schritte aufweist: Identifizieren einer Menge von Teilmengen einer Menge zur Präsentation dieser Menge anhand von Vorkommen von Elementen in der Menge von Mengen von Elementen, speichern der Teilmengen und Rekonstruieren der Menge aus den Teilmengen zum Modifizieren und Inspizieren der Datenstruktur.

Die Vorteile der Erfindung bestehen in der kompakten Präsentation, d.h. in der effizienten Nutzung von Speicherressourcen verglichen mit den Bittvektoren in Verbindung mit einer effizienten (schnellen) Verfahren zur Manipulation und zur Inspektion.

Die Erfindung ist insbesondere vorteilhaft bei dünn besetzten Mengensystemen (sparse power sets) mit statistischen Konzentrationen wie sie in der Praxis häufig auftreten.

Insbesondere ist die Erfindung für sogenannte , rich feature systems oder feature sets' anwendbar, bei denen die Fähigkeiten (capabilities, features) von Geräten durch Mengen präsentiert wird.

Die Erfindung wird im Folgenden näher anhand der Abbildungen beschrieben, wobei
Fig. 1 ein Entity Relationship Diagram für Mengen (sets) und Multimengen (bags) darstellt.
Fig. 2 zeigt ein Beispiele für eine Präsentation eines Mengensystems nach dem Stand der Technik
Fig. 3 zeigt ein Entity Relationship Diagramm und ein Häufigkeitsdiagramm um das Verfahren nach der Erfindung zu illustrieren
Fig. 4 zeigt ein Beispiele für eine Präsentation eines Mengensystems mit der Datenstruktur des Computer Programms nach der Erfindung.
Fig. 5 zeigt ein Klassendiagram von einem Computer Programm eines Netzelements nach der Erfindung.

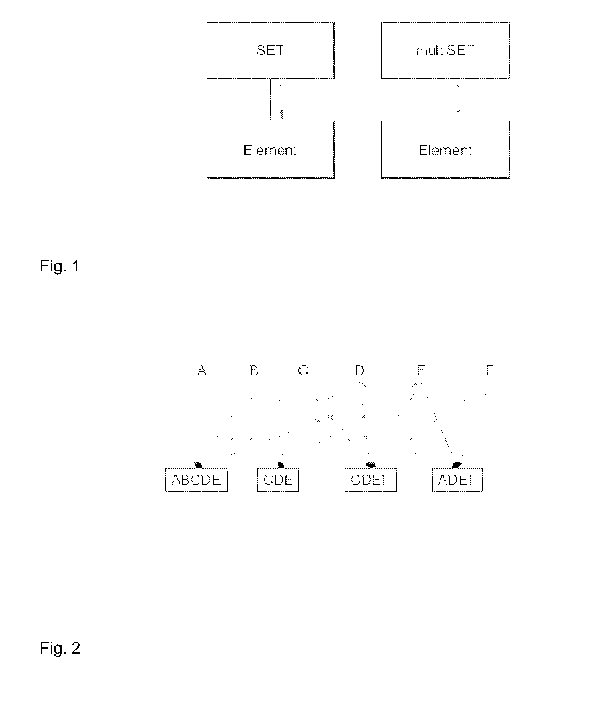

Der linke Teil von Fig. 1 zeigt das Entity Relation Diagramm einer Menge , SET' von Elementen , Element' wobei die Relation, die die zwei Rechtecke verbindende Gerade ist. Die Gerade ist an den Enden mit den Kardinalitäten beschriftet. D.h. ein und dasselbe Element, Element' kann einmal 1 in einer Menge , SET' vorkommen, aber es können viele * (verschiedene) Elemente , Element' in der Menge sein. In dem rechten Teil ist das Entity Relationship Diagramm einer Multimenge , multiSET' dargestellt. Im Gegensatz zur einfachen Menge , SET' kann eine Multimenge, MultiSET' ein und das selbe Element , Element' mehrfach * enthalten.

Die Abbildung verdeutlicht auch die Inspektions- und ModifikationsMethoden: Das kreieren von Elementen und das zuordnen von Mengen zu Aggregationsstrukturen, nämlich der Menge , SET' oder der Multimenge multiSET'. Gängige Inspektionsbasismethoden sind der Test ob eine Menge oder Multimenge leer ist, oder ob sie ein bestimmtes Element enthält oder der Vergleich von Aggregationsstrukturen. Ebenso sind Komplexoperationen wie Schnitt oder Vereinigung solche Modifikationsmethoden.

Die Datenstruktur basiert auf der Charakteristischen Funktion einer Menge, also der Funktion die den Wert 1 für Elemente einer Menge hat und 0 sonst.

Fig. 2 zeigt graphisch die vier Mengen , ABCDE' , , CDE' CDEF' , , ADEF' mit Elementen , A' ,, B' ,, C' ,, D' ,, E' ,, F' Genauer eine erste Menge , ABCDE' mit den Elementen , A' ,, B' , , C' ,, D' ,, E' , eine zweite Menge, CDE' mit den Elementen , C' ,, D' ,, E' , usw. durch die Pfeile ist gezeigt welches der Elemente , A' ,, B' ,, C' ,, D' ,, E' ,, F' in welcher der Mengen, ABCDE' ,, CDE' CDEF' ,, ADEF' enthalten ist.

Damit entsprechen die Pfeile den , 1' -en in den Charakteristischen Funktionen; so ist die Charakteristische Funktion X _ ABCDE der ersten Menge , ABCDE' 1 für die Werte, A' ,, B' ,, C' ,, D' ,, E' gleich 1; also X_ ABCDE(A) = X _ ABCDE(B) = X _ ABCDE(C) = X _ ABCDE(D) = X _ ABCDE(E) = 1 und X_ ABCDE(F) = 0. Entsprechend ist X _ CDE(C) = X _ CDE(D) = X _ CDE(E) = 1 und X _ CDE(A) = X _ CDE(B) = X _ CDE(F) = 0. Üblicher Weise werden diese Funktionen durch Bitarrays, d.h. Bitvektoren über dem geordneten Elementbereich , A' <, B' < , C' < , D' < , E' , < , F' präsentiert, alo wird die erste Menge durch den Bitvektor " 111110" und die zweite Menge durch " 001110" dargestellt, etc. insgesamt werden zur Präsentation der Mengen in der Abbildung als Bitvektoren 4*6 = 24 Bits, aber zumindest 16 Referenzen (Anzahl der Pfeile) benötigt.

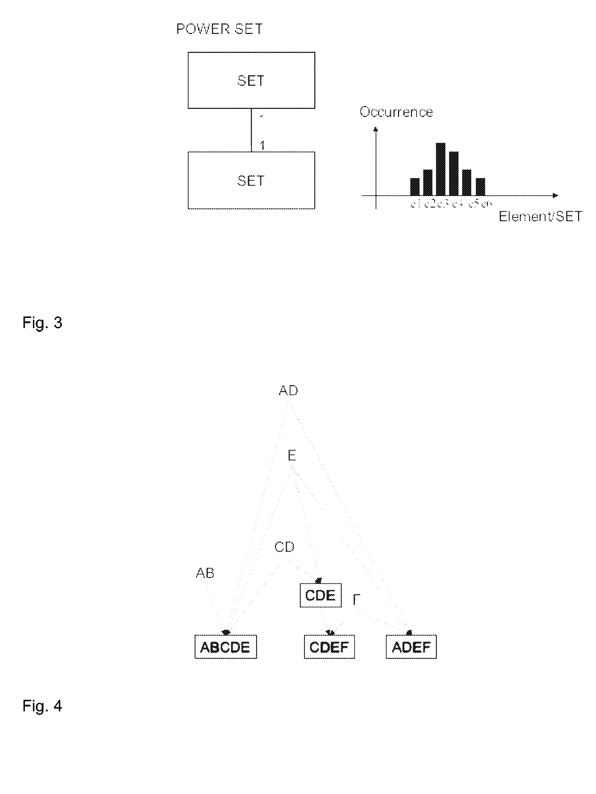

Fig. 3 zeigt schematisch die Idee der Erfindung, die Mengen als eine Mengen als Mengen , POWER SET' zu präsentieren. Bei der Präsentation wird die Häufigkeit des Vorkommens eines Elementes berücksichtigt. Diese Häufigkeit eines Elementes gibt an in wie vielen Mengen des Mengensystems dieses Element vorkommt. Die Häufigkeit ist als Verteilungsfunktion , Occurence' über den Elementen , Element' dargestellt.

In Fig. 4 ist eine Präsentation nach dem beanspruchten Verfahren dargestellt. Dazu wurden die Teilmengen , AB' ,, AD' und , CD' sowie die (ein-elementigen) Teilmengen , E' und , F' identifiziert aus denen sich die Mengen des in Fig. 2 dargestellten Mengensystems rekonstruieren. So setzt sich die erste Menge , ABCDE' aus den Teilmengen , AB' , CD' , , E' und , AD' zusammen. Entsprechend setzt sich die zweite Menge , CDE' aus , CD' und , E' zusammen. Insgesamt definiert der partielle Boolsche Verband das Mengensystem wobei die definierenden Teilmengen so gewählt sind, dass lediglich 10 Pfeile anstatt der 16 benötigt werden.

Je größer der Elementvorrat ist und je dünner die Mengen belegt sind umso großer wird der Platzkompressions-Effekt.

Da der Teilmengenverband homomorph verträglich mit den Üblichen Mengenoperationen wie können die Teilmengen durch die üblichen Verfahren präsentiert werden. Damit sind die Schnittstellen zu der Datenstruktur nach der Erfindung einfach realisierbar und die Teilmengen können anstatt elementweiße präsentiert zu werden einfach provisioniert (bereitgestellt, definiert) werden. Das Provisionieren stellt den Akt dar eine Teilmenge dem System zu definieren / bekannt zu machen.

Die oben erwähnten Methoden operieren danach auf bekannt gemachten Teilmengen.

Der induzierte partielle Teilmengenverband, d.h. die Menge aller möglichen Schnittmengen, ist die algebraische Struktur, die zur Präsentation alle mengentheoretischen Informationen enthält. Die Atome dieser Struktur, d.h. die nichtleeren Teilmengen die durch die Schnittbildung nicht mehr verkleinert werden können, werden vorzugsweise provisioniert.

In dem in Fig. 4 dargestellten Beispiel sind die zu provisionierenden Mengen , AB' ,, AD' , ' E' ,, CD' und , F' .

Damit lassen Sich die Mengen, ABCDE' ,, CDE' ,, CDEF' und , ADEF' rekonstruieren, nämlich beispielsweise durch Präsentation der zu komponierenden Mengen. Vorzugsweise werden häufig vorkommende Mengen eigens provisioniert um den Rekonstruktionsaufwand zu minimieren.

Die Menge , ABCDE' wird beispielsweise durch die Vereinigung der atomaren Teilmengen , AB' ,, AB' , , AD' , , E' und , CD' präsentiert. , CDE' wird durch die Vereinigung von , CD' und , E' präsentiert. , CDEF' wirf durch ddie Vereinigung von der atomaren Teilmenge , F' und der rekursiv zu rekonstruierenden Menge , CDE' präsentiert. Entsprechend werden die anderen Mengen präsentiert.

Je nach zu präsentierenden Informationsgehalt über das Mengensystem kann auch nur ein Teil des atomaren Teilmengensystems präsentiert werden, vorzugsweise der Teil auf den häufiger zugegriffen oder der, der am häufigsten vorkommt.

In dem Beispiel kommt, E' drei ml vor,, AD' zwei mal,, CD' zwei mal,, F' zwei mal und, AB' einmal. Damit ist beispielsweise das Weglassen von, AB' ein nachrangiger Informationsverlust zum Weglassen von , E' .

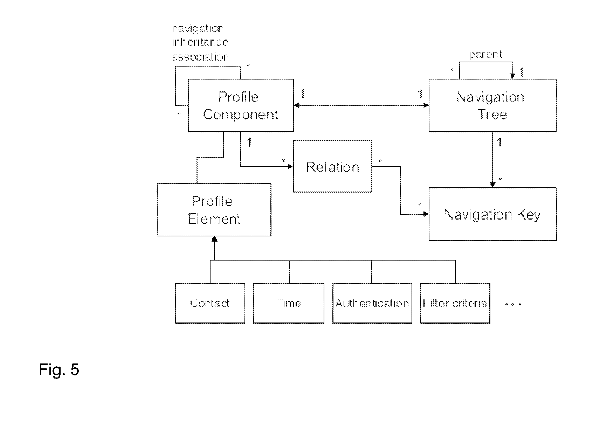

Eine technisch interessante Anwendung des Verfahrens nach der Erfindung ist die Provisionierung von sogenannten , Feature Sets' . Fig. 5 zeigt ein Klassendiagramm einer entsprechenden Software. Es zeigt eine erste Klasse, Navigation Tree' und eine zweite Klasse, Profile Component' . Die Instanzen der erste Klasse, Navigation Tree' sind in einer Hierarchie, parent' angeordnet. Jede der Instanzen besitzt einen eineindeutigen Schlüssel, der als die weitere Klasse, Navigation Key' modelliert ist. Die zweite Klasse, Profile Component' modelliert die oben genannten (abstrakten) (feature) Teilmengen. Diese Teilmengen sind in mehreren Weisen relational komponierbar, inherritence, navigation, association' . Instanzen der ersten Klasse , Navigation Tree' eintsprechen eins-zu-eins Instanzen der zweiten Klasse, Profile Component' . Damit sind diese Instanzen provisionierbar. Die zwischen den zu präsentierenden (feature) Mengen bestehenden Relationen können in einer eigens dafür definierten vierten Klasse, Relation' abgelegt werden. Die Primitiven Elemente aus denen sich eine Instanz von der zweiten Klasse, Profile Component' zusammensetzt sind instanzen einer fünften Klasse, Profile Element' die ihrerseits Instanzen der Klassen, Contact' ,, Time' ,, Authentication' ,, Filter criteria' , ... sind, wobei letztere die Features gruppieren.

## Patentansprüche

1. Ein Computer Programm Produkt mit einer Datenstruktur zum Präsentieren einer Menge von Mengen von Elementen aus einem festen Elementvorrat und die Datenstruktur Methoden zum Modifizieren oder Inspizieren einer dieser Mengen hat, **dadurch gekennzeichnet, dass** die Menge durch Präsentationen von provisionierten Teilmengen aus einem induzierten partiellen Mengenverband zusammengesetzt ist.

2. Das Computer Programm Produkt nach Anspruch 1 **dadurch gekennzeichnet, dass** die Elemente aus dem festen Elementvorrat durch freie Namensgebung definiert ist.

3. Das Computer Programm Produkt nach Anspruch 1 **dadurch gekennzeichnet, dass** die atomaren Mengen aus dem induzierten partiellen Mengenverband durch freie Namensgebung definiert sind oder durch eine weitere Datenstruktur präsentiert sind.

4. Das Computer Programm Produkt aus Anspruch 1 **dadurch gekennzeichnet, dass** die Elemente Features eines Teil eines Kommunikationssystems präsentieren.

5. Das Computer Programm Produkt nach Anspruch 1 **dadurch gekennzeichnet, dass** die Teilmengen inkrementell und randomisiert durch das Analysieren oder Modifizieren identifiziert werden und das der induzierte Verband partiell präsentiert ist.

6. Ein Netzelement das Mittel zur Kommunikation mit anderen Netzelementen aufweist **dadurch gekennzeichnet, dass** die Mittel ein Computer Programm Produkt nach Anspruch 4 umfassen.

7. Ein Verfahren zum Modifizieren oder Inspizieren einer Datenstruktur zum Präsentieren einer beliebigen Menge von Mengen von Elementen aus einem festen Elementvorrat **dadurch gekennzeichnet, dass** das Verfahren die folgenden Schritte aufweist: Identifizieren einer Menge von Teilmengen einer Menge zur Präsentation dieser Menge anhand von Vorkommen von Elementen in der Menge von Mengen von Elementen, speichern der Teilmengen und Rekonstruieren der Menge aus den Teilmengen zum Modifizieren und Inspizieren der Datenstruktur.
